# EUROPÄISCHE PATENTSCHRIFT

(11) **EP 1 708 583 B1**
(45) Veröffentlichungstag und Bekanntmachung des Hinweises auf die Patenterteilung: **30.09.2009**
(21) Anmeldenummer: 05706839.7
(22) Anmeldetag: 07.01.2005
(51) Int. Cl.: A24C 5/47, A24C 5/00, B23K 26/08

(54) **VORRICHTUNG ZUM HERSTELLEN VON ZIGARETTEN MIT MUNDSTÜCK**
DEVICE FOR PRODUCING CIGARETTES WITH A TIP
DISPOSITIF POUR PRODUIRE DES CIGARETTES MUNIES D'UN EMBOUT

(30) Priorität: 26.01.2004 DE 102004003999
(43) Veröffentlichungstag der Anmeldung: 11.10.2006
(73) Patentinhaber: Focke & Co. (GmbH & Co. KG), 27283 Verden (DE)
(72) Erfinder: BECKMANN, Frank, 21521 Aumühle (DE); ENGEL, Gisbert, 27308 Luttum (DE); JACOBI, Tobias, 21423 Winsen/Luhe (DE)
(74) Vertreter: Bolte, Erich
(86) Internationale Anmeldenummer: PCT/EP2005/000069
(87) Internationale Veröffentlichungsnummer: WO 2005/070240

(56) Entgegenhaltungen:
- DE-A1- 10 152 526
- GB-A- 2 022 492
- GB-A- 2 101 029
- GB-A- 20 904 211
- US-A- 4 281 670
- US-A- 4 390 032
- US-A- 4 720 619
- US-A- 5 404 889
- US-A1- 2001 032 697
- US-B1- 6 325 068

## Beschreibung

Die Erfindung betrifft eine Vorrichtung zum Herstellen von Zigaretten mit Mundstück, insbesondere von Filterzigaretten, mit einem Perforationen bzw. Löcher aufweisenden Mundstück- oder Belagpapier, wobei die Perforationen bzw. Löcher im Bereich einer fortlaufenden Bahn des Belagmaterials bzw. Belagpapiers in regelmäßigen Lochgruppen angeordnet sind, insbesondere mit Längsreihen und Querreihen von Löchern, die durch einen einzigen, mit Hilfe von Spiegeln umgelenkten Laserstrahl hergestellt sind und wobei die Bahn im Anschluss an das Perforationsaggregat durch eine Leimstation hindurchförderbar ist, in der Leim im Bereich ausgewählter Flächen durch ein Beleimungsaggregat auf die fortlaufende Bahn übertragbar ist.

Die Perforation des Mundstück- bzw. Belagpapiers für Zigaretten mit einem derartigen Mundstück ist bekannt. Bisher werden vorwiegend Perforationen in dem Belagpapier mit Hilfe von mechanischen Organen hergestellt, nämlich mit drehbaren Stachel-Walzen (US 4 390 032). Bekannt ist aber auch die Anbringung der Perforationen mittels Strahl. Beim vorgenannten Stand der Technik wird ein Elektronenstrahl verwendet, der mittels Magnet abgeleitet wird, um Formationen von Löchern zu erzeugen.

Bekannt ist auch die Anbringung von Perforationen im Belagpapier mittels Laserstrahl (GB 2 094 211). Bei diesem bekannten Verfahren wird ein ursprünglich zentraler Laserstrahl durch optische Hilfsmittel aufgeteilt in mehrere (sechs) Teilstrahlen, die nach Umlenkung je ein Loch erzeugen in einer fortlaufenden Bahn des Belagpapier. Die Laserstrahlen werden so getaktet, dass zwei Gruppen von parallelen Lochreihen erzeugt werden. Bei dieser bekannten Technologie ist die Leistungsfähigkeit und auch die Anpassbarkeit der Einrichtung zum Erzeugen der Perforationen begrenzt.

Der Erfindung liegt die Aufgabe zugrunde, eine Einrichtung zum Anbringen von Perforationen bzw. Löchern in Belagpapier für die Herstellung von Zigaretten mittels Laser dahingehend zu verbessern, dass die Leistungsfähigkeit unter Anpassung an entsprechend leistungsfähige Herstellungsmaschinen zu verbessern und auch eine Anpassung an jeweils unterschiedliche Fertigungsgeschwindigkeiten zu ermöglichen.

Zur Lösung dieser Aufgabe ist die erfindungsgemäße Vorrichtung durch folgende Merkmale gekennzeichnet:
a) der Laserstrahl ist einem Strahllenker zuführbar, insbesondere einem drehenden Prismenspiegel bzw. Polygonspiegel mit einer Vielzahl von Einzelspiegein,
b) der von dem Strahllenker abgelenkte bzw. reflektierte Laserstrahl ist auf einen Strahlreflektor gerichtet mit einer Spiegelgruppe aus einer Mehrzahl von Richtspiegeln, die je einem herzustellenden Loch zugeordnet sind,
c) der vom Strahlreflektor bzw. von dessen Umlenkspiegeln reflektierte Laserstrahl ist auf einen oberhalb der Materialbahn angeordneten Strahlumlenker gerichtet, insbesondere mit zwei Umlenkspiegeln, die je zur Erzeugung einer Lochgruppe dienen.

Bei der erfindungsgemäßen Technologie wird die Perforation des Belagpapiers durch einen einzelnen Laserstrahl erzeugt, der - ohne geteilt zu werden - ausschließlich durch Umlenk- und Reflektionsorgane innerhalb kurzer Arbeitstakte quergerichtete Reihen von Perforationen herstellt, insbesondere in zwei parallelen Perforationsgruppen.

Weitere Merkmale der Erfindung sind Gegenstand von Unteransprüchen.

Ausführungsbeispiele der erfindungsgemäßen Vorrichtung werden nachfolgend anhand der Zeichnungen näher erläutert. Es zeigt:
- Fig. 1: eine Einrichtung als Teil einer Zigaretten-Herstellmaschine bzw. eines Filteransetzers in schematischer Seitenansicht,
- Fig. 2: einen Ausschnitt II. der Fig. 1 in vergrößertem Maßstab,
- Fig. 3: die Einzelheit gemäß Fig. 2 in Draufsicht gemäß Pfeil III. in Fig. 2,
- Fig. 4: die Perforationseinrichtung in Draufsicht,
- Fig. 5: eine Seitenansicht der Einrichtung in der Sichtebene V-V der Fig. 4,
- Fig. 6: eine Queransicht der Einzelheit gemäß Fig. 5 in der Sichtebene VI-VI,
- Fig. 7: eine Einzelheit der Vorrichtung gemäß Fig. 6 in vergrößertem Maßstab,
- Fig. 8: eine Laser-Perforationseinrichtung bei veränderter Relativstellung von Strahllenkorganen,
- Fig. 9: die Vorrichtung gemäß Fig. 8 in einer Seitenansicht gemäß Pfeil IX in Fig. 8,
- Fig. 10: die Ausführungsform gemäß Fig. 8 und Fig. 9 in einer Draufsicht,
- Fig. 11: einen Abschnitt einer Material- bzw. Papierbahn mit Lochgruppen in Draufsicht.

Die dargestellten Ausführungsbeispiele befassen sich mit der Perforation von Materialbahnen 10, insbesondere aus Papier, zum Herstellen von Zigaretten mit Mundstück bzw. Filter. Die Materialbahn 10 ist so ausgebildet, dass durch Abtrennen jeweils Doppelzuschnitte 11 mit je zwei nebeneinander liegenden Belagzuschnitten 12, 13 hergestellt werden. Die Doppelzuschnitte 11 werden üblicherweise zum Herstellen einer Doppelzigarette verwendet, die danach im mittigen Bereich zwischen den Belagzuschnitten 12, 13 durchtrennt wird: Jeder Belagzuschnitt ist mit einer Gruppe von Löchern 14 versehen, also einer Lochgruppe 15, 16. Diese bilden ein definiertes Feld innerhalb eines Belagzuschnitts 12, 13. Außerhalb der Lochgruppen 15, 16 werden Leimfelder 17 gebildet, also lochfreie Bereiche, die mit Leim versehen werden, um den Belagzuschnitt 12, 13 mit der Zigarette bzw. einem Filter zu verbinden.

Die Lochgruppen 15, 16 bestehen aus in Reihen angeordneten Löchern 14, nämlich mit Querreihen 18 und Längsreihen 19. Jede Lochgruppe 15, 16 besteht bei diesem Ausführungsbeispiel aus vier Längsreihen 19, jede Querreihe 18 mithin aus vier Löchern 14.

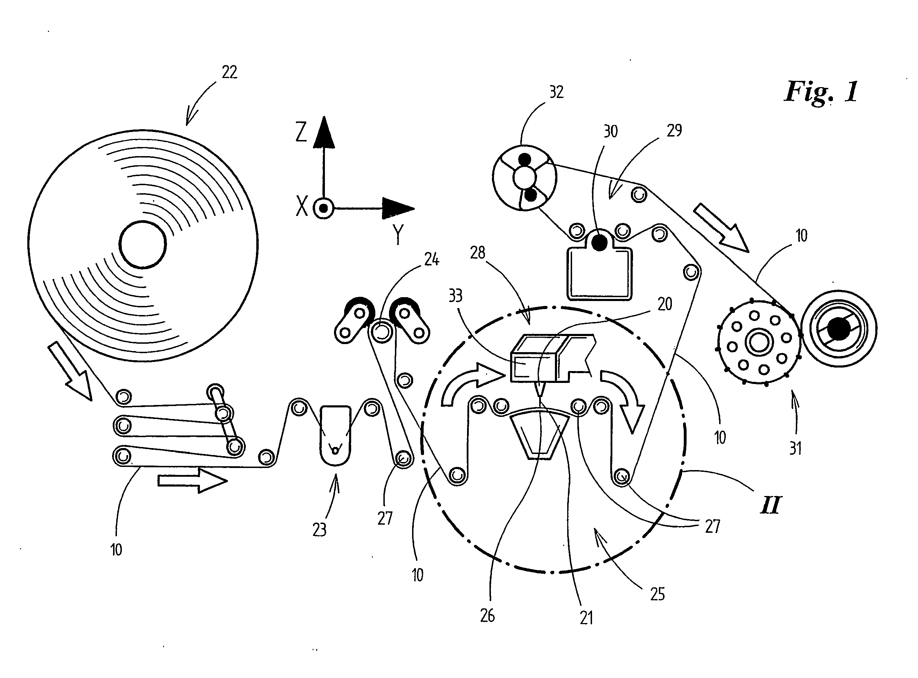

Die Löcher 14 werden in der Materialbahn 10 mittels Laser 20 hergestellt. Dieser erzeugt einen einzigen Laserstrahl 21. Eine Besonderheit besteht darin, dass durch den Laserstrahl 21 bei vorzugsweise kontinuierlich bewegter Materialbahn 10 gleichzeitig zwei Querreihen 18 durch Anbringen von Löchern 14 hergestellt werden. Der Laserstrahl 21 wird dabei innerhalb extrem kurzer Taktzeiten mehrmals abgelenkt, sodass die in einer gemeinsamen Querebene der Materialbahn 10 liegenden (acht) Löcher 14 der beiden Querreihen 18 faktisch gleichzeitig hergestellt werden, jedenfalls mit einem nicht wahrnehmbaren Versatz. Durch diese exakte Querperforation der Materialbahn 10 werden geschlossene Lochgruppen 15, 16 ausgerichtet nebeneinander liegend und mit Abstand in Richtung der Materialbahn 10 aufeinanderfolgend hergestellt. Dies ist erforderlich, wenn gemäß Ausführungsbeispiel der Fig. 1 die Laserperforation der Materialbahn im Bereich einer Zigarettenherstellmaschine bzw. eines Filteransetzers durchgeführt wird.

Fig. 1 zeigt eine Einrichtung bzw. ein Aggregat, welches einem (konventionellen) Filteransetzer (nicht gezeigt) beigestellt wird. Die Materialbahn 10, insbesondere aus Papier, wird von einer Bobine 22 abgezogen, wird über Umlenkrollen geführt, durchläuft eine Biegevorrichtung 23 zum Vorbiegen des Materials. Über eine Antriebsrolle 24 gelangt die Materialbahn 10 in den Bereich eines Perforationsaggregats 25. Dieses besteht aus einer im Wesentlichen horizontalen, jedoch gewölbten Auflage 26, an der die Materialbahn mittels Saugbohrungen gleitend fixiert wird. Im Bereich dieser Auflage 26 zwischen Umlenkrollen 27 erfolgt die Anbringung der Löcher 14 mittels Lasereinheit 28. Danach wird die mit den Lochgruppen 15, 16 versehene Materialbahn 10 einem Leimaggregat 29 zugeführt, welches im Wesentlichen oberhalb des Perforationsaggregats 25 angebracht ist. Das Leimaggregat 29 weist eine Leimwalze 30 auf, die durch Anlage der Innenseite der Materialbahn 10 Leimbereiche, nämlich Leimfelder 17, auf die Materialbahn 10 überträgt.

Die mit Löchern 14 und Leim versehene Materialbahn gelangt sodann in den Bereich eines Schneidaggregats 31. Hier werden die einzelnen Zuschnitte, nämlich Doppelzuschnitte 11, positionsgenau von der Materialbahn 10 abgetrennt und der weiteren Verarbeitung, nämlich einem Filteransetzaggregat zugeführt. Dem Schneidaggregat 31 ist ein Oszillator 32 vorgeordnet, der den zum Schneidaggregat 31 führenden Bereich der Materialbahn 10 taktweise fördert, derart, dass nach dem Abtrennen jeweils eines (Doppel-)Zuschnitts 11 Abstände zwischen den aufeinander folgenden Zuschnitten gebildet werden. Die Herstellung kompletter, unmittelbar verarbeitungsfähiger Zuschnitte bzw. Doppelzuschnitte 11 für (Filter-) Zigaretten erfolgt demnach im Bereich der Zigarettenherstellmaschine.

Die Lasereinheit 28 ist in einem Gehäuse 33 angeordnet, aus dem der Laserstrahl 21 unten austritt. Die Lasereinheit 28 besteht aus dem Laser 20, einem Strahllenker in der Ausführung eines Polygonspiegels 34, einem Strahlreflektor, hier mit einer Gruppe von Richtspiegeln 35, 36 sowie einem Umlenkreflektor in der Ausführung mit zwei Umlenkspiegeln 37, 38. Der Polygonspiegel 34 besteht aus einer Vielzahl von längs eines Kreisbogens angeordneten, ebenen Einzelspiegeln 39. Der Polygonspiegel 34 bzw. die Einzelspiegel 39 sind auf den ankommenden Laserstrahl 21 gerichtet. Zwischen dem Laser 20 und dem Polygonspiegel 34 befindet sich ein Ablenkspiegel 40, der den Laserstrahl 21 jeweils auf einen der Einzelspiegel 39 richtet. Der Polygonspiegel 34 ist drehend angetrieben, insbesondere mittels Servomotor 41. Die Vielzahl der Einzelspiegel 39 wird während der Umdrehung nacheinander in die Empfangsposition für den Laserstrahl 21 bewegt.

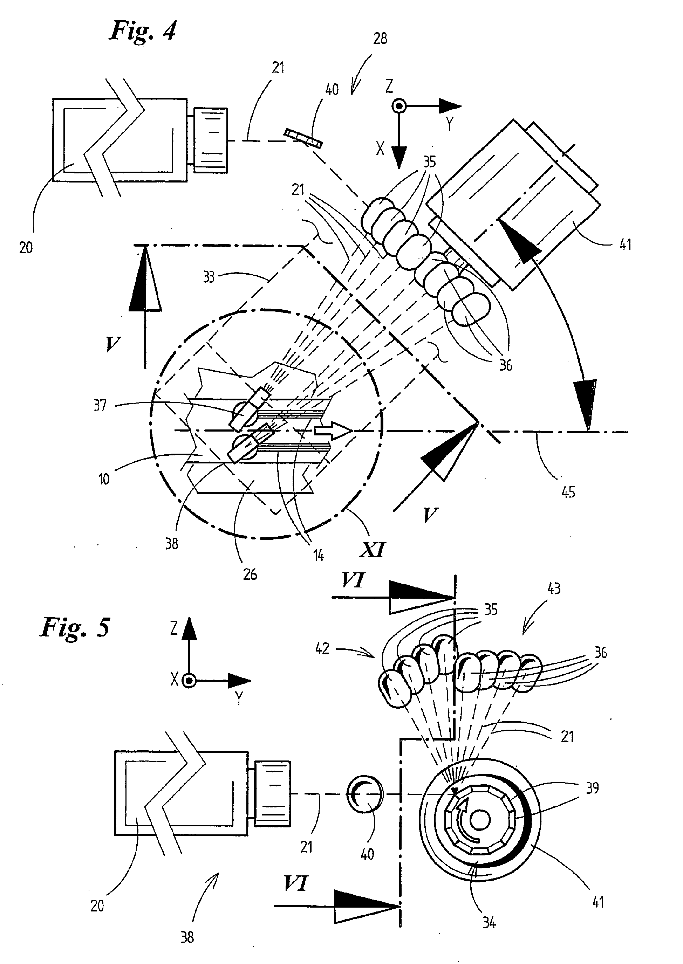

Der vom Polygonspiegel 34 bzw. dem jeweiligen Einzelspiegel 39 reflektierte Laserstrahl 21 wird auf die Richtspiegel 35, 36 gerichtet und von diesen reflektiert. Die Relativstellung ist so gewählt, dass der Laserstrahl 21 von dem betreffenden Einzelspiegel 39 nacheinander auf alle Richtspiegel 35, 36 auftrifft. Dies ergibt sich aus der (kontinuierlichen) Bewegung des Einzelspiegels 39 infolge Drehung des Polygonspiegels 34 (Fig. 5). Die Richtspiegel 35, 36 sind in zwei Spiegelgruppen 42, 43 angeordnet, wobei jeder Einzelspiegel 39 einem Loch 14 und jede Spiegelgruppe 42, 43 einer Querreihe 18 zugeordnet ist. Der Bewegungsablauf ist derart, dass durch den Einzelspiegeln 39 nacheinander die Richtspiegel 35, 36 beaufschlagt und entsprechend (acht) Löcher 14 hergestellt werden, und zwar im Wesentlichen gleichzeitig, bezogen auf die Fördergeschwindigkeit der Materialbahn 10.

Der von den Richtspiegeln 35, 36 reflektierte Laserstrahl 21 wird nochmals umgelenkt, nämlich aus einer Ebene oberhalb der Materialbahn 10, insbesondere aus einer horizontalen Ebene, in Abwärtsrichtung, nämlich auf die Materialbahn 10. Dabei wird der Laserstrahl 21 durch eine Linse 44 fokussiert.

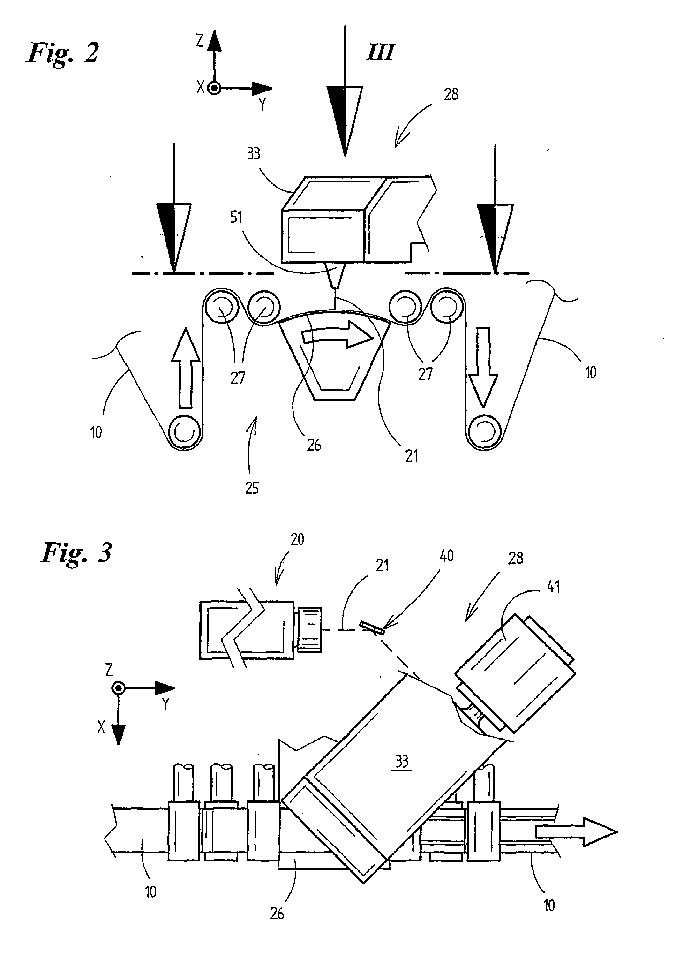

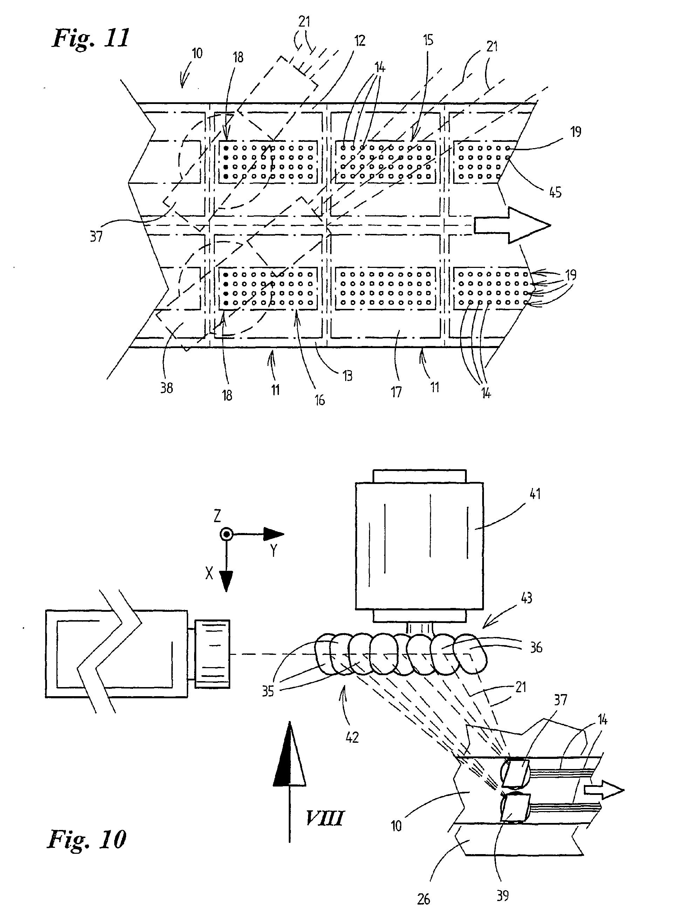

Die Relativstellung zwischen den Reflektions- und Ablenkorganen der Lasereinheit 28 ist so gewählt, dass der einzelne Laserstrahl 21 faktisch gleichzeitig die Querreihen 18 der beiden Lochgruppen 15, 16 bildet, wie in Fig. 11 anhand der punktförmigen Darstellung der Löcher 14 gezeigt. Dies wird vor allem dadurch erreicht, dass zwischen den Richtspiegeln 35, 36 einerseits und den (jeder Lochgruppe 15, 16 zugeordneten) Umlenkspiegeln 37, 38 eine entsprechende Relativstellung gewählt ist. Bei dem Ausführungsbeispiel gemäß Fig. 3 bis Fig. 5 sind die jeweils in einer Reihe nebeneinander angeordneten Richtspiegel 35, 36 schräg zur Längserstreckung der Materialbahn 10 angeordnet, nämlich zu einer gedachten Mittelachse 45. Auch der Polygonspiegel 34 ist in entsprechender Schrägstellung positioniert, und zwar in einer im Wesentlichen vertikalen Ebene drehend. Die Umlenkspiegel 37, 38 oberhalb der Materialbahn 10 sind auf die zugeordnete Gruppe von Richtspiegeln positioniert, nämlich der Umlenkspiegel 37 zu den (vier) Richtspiegeln 35 und der Umlenkspiegel 38 zu den Richtspiegeln 36. Die Umlenkspiegel 37 sind so unter einem Winkel zur Längserstreckung der Materialbahn 10 bzw. zur Mittelachse 45 gerichtet, und zwar mit unterschiedlichen Winkel, sodass die Umlenkspiegel 37, 38 - in Draufsicht - unter einem Winkel zueinander liegen. Bei dem Beispiel gemäß Fig. 4 ist die Einheit der Richtspiegel 35, 36 etwa unter einem Winkel 45° zur Mittelachse 45 angeordnet. Die Richtspiegel 35, 36 werden innerhalb extrem kurzer Zeitspannen nacheinander von den Richtspiegeln 35 bzw. 36 beaufschlagt, unter Bildung der Querreihe 18 der Lochgruppe 15 einerseits und der Lochgruppe 16 andererseits. Die Relativstellung ist in den Zeichnungen durch ein dreiachsiges Koordinatensystem mit den Achsen X, Y und Z dargestellt, wobei die Achsen X und Y sich in der Horizontalebene erstrecken.

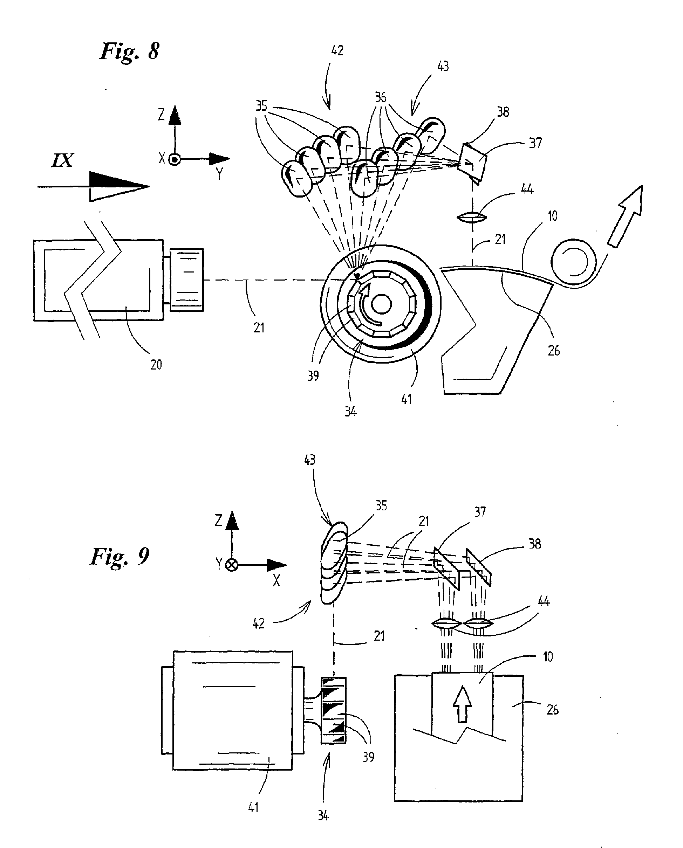

Bei dem Ausführungsbeispiel gemäß Fig. 8 bis Fig. 10 wird nach dem gleichen Prinzip vorgegangen. Der Polygonspiegel 34 ist in einer vertikalen Ebene parallel zur Bewegungsrichtung der Materialbahn 10 angeordnet (Y-Achse). Der Laser 20 ist so positioniert, dass der ausgesandte Laserstrahl im Wesentlichen horizontal gerichtet ist. Die oberhalb des Polygonspiegels 34 positionierten Richtspiegel 35, 36 sind - in zwei Gruppen zu je vier Richtspiegeln 35, 36 - in Höhe der oberhalb der Materialbahn 10 positionierten Umlenkspiegel 37, 38 angeordnet. Diese wiederum sind in zwei Richtungen schräg gestellt, derart, dass der von den Richtspiegeln 35, 36 zugeführte, im Wesentlichen horizontale Laserstrahl 21 durch den zugeordneten Umlenkspiegel 37, 38 erfasst und aufgrund der Relativstellung unter Bildung der Löcher 14 der Querreihen 18 auf die Materialbahn 10 gelenkt wird. Die beiden Richtspiegel 35, 36 sind auch hier in unterschiedlichen Schrägstellungen, jeweils in zwei Richtungen, angeordnet.

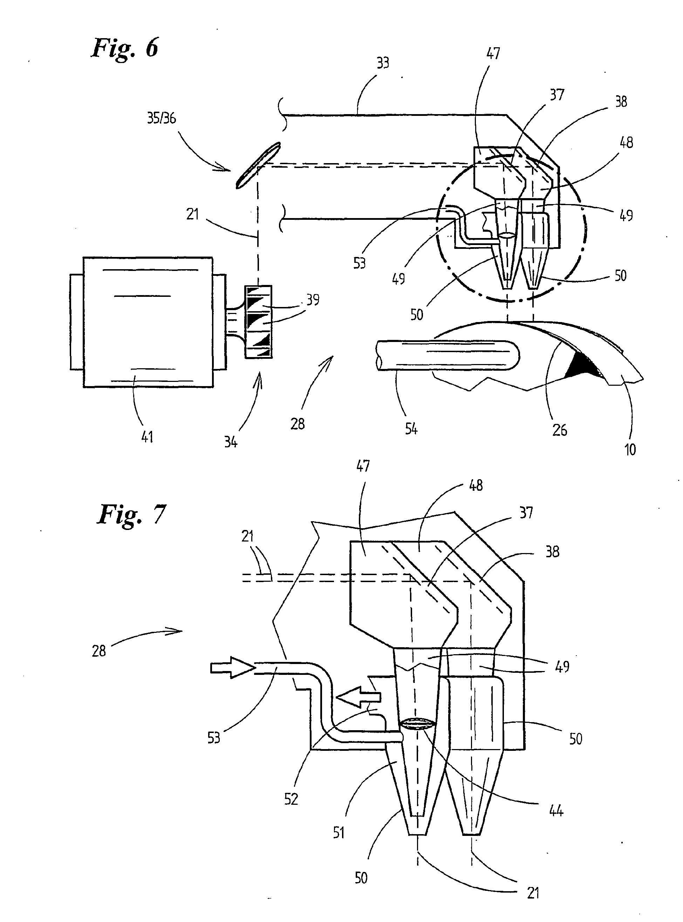

Die Lasereinheit 28 bzw. Lenk- und Reflektionsorgane derselben, sind in einem Gehäuse 46 angeordnet. Der Polygonspiegel 34 ist gemäß Fig. 6 quer zur Längserstreckung des Gehäuses 46 angeordnet. Die Richtspiegel 35, 36 befinden sich innerhalb des Gehäuses 46. Die (zwei) Umlenkspiegel 37, 38 sind als besondere Einheiten ausgebildet, nämlich mit Einzelgehäusen 47, 48 für jeden Umlenkspiegel 37, 38. An das Einzelgehäuse 47, 48 schließt nach unten ein rohrförmiges, konvergierendes Anschlussstück 49 an. In diesem ist die Linse 44 angeordnet. Aus dem Anschlussstück 49 tritt unten der Laserstrahl 21 aus, und zwar entsprechend den Löchern 14 der Querreihen 18 in veränderlicher Position.

Dem Gehäuse 46 bzw. den Einzelgehäusen 47, 48 ist eine Einrichtung zur Staubbeseitigung zugeordnet. Zu diesem Zweck ist jedes Anschlussstück 49 im unteren Teil von einem Außengehäuse 50 umgeben, welches an der Außenseite des Anschlussstücks 49 eine im Querschnitt ringförmige Absaugkammer 51 bildet. Diese ist nach unten offen und mit einem seitwärts gerichteten Absauganschluss 52 versehen. An das Anschlussstück 49 schließt eine Rohrleitung 53, die Druckluft in das Anschlussstück 49 einführt, und zwar unterhalb der Linse 44. In Verbindung mit dem Außengehäuse 50 wird in der Absaugkammer ein Unterdruck erzeugt, sodass Staub aus diesem Bereich abgeleitet wird.

Des Weiteren wird Staub an der Unterseite der Materialbahn 10 abgesaugt, und zwar im Bereich der Auflage 26. Diese ist Teil eines Hohlkörpers, an den ebenfalls ein Absaugrohr 54 anschließt (Fig. 6).

Bezugszeichenliste
- 10: Materialbahn
- 11: Doppelzuschnitt
- 12: Belagzuschnitt
- 13: Belagzuschnitt
- 14: Loch
- 15: Lochgruppe
- 16: Lochgruppe
- 17: Leimfeld
- 18: Querreihe
- 19: Längsreihe
- 20: Laser
- 21: Laserstrahl
- 22: Bobine
- 23: Biegevorrichtung
- 24: Antriebsrolle
- 25: Perforationsaggregat
- 26: Auflage
- 27: Umlenkrollen
- 28: Lasereinheit
- 29: Leimaggregat
- 30: Leimwalze
- 31: Schneidaggregat
- 32: Oszillator
- 33: Gehäuse
- 34: Polygonspiegel
- 35: Richtspiegel
- 36: Richtspiegel
- 37: Umlenkspiegel
- 38: Umlenkspiegel
- 39: Einzelspiegel
- 40: Ablenkspiegel
- 41: Servomotor
- 42: Spiegelgruppe
- 43: Spiegelgruppe
- 44: Linse
- 45: Mittelachse
- 46: Gehäuse
- 47: Einzelgehäuse
- 48: Einzelgehäuse
- 49: Anschlussstück
- 50: Außengehäuse
- 51: Absaugkammer
- 52: Absauganschluss
- 53: Rohrleitung
- 54: Absaugrohr

## Patentansprüche

1. Vorrichtung zum Herstellen von Zigaretten mit Mundstück, insbesondere von Filterzigaretten, mit einem Perforationen bzw. Löcher (14) aufweisenden Mundstück- oder Belagpapier, wobei die Perforationen bzw. Löcher (14) im Bereich einer fortlaufenden Bahn (10) des Belagmaterials bzw. Belagpapiers in regelmäßigen Lochgruppen (15, 16) angeordnet sind, insbesondere mit Längsreihen (19) und Querreihen (18) von Löchern (14), die durch einen einzigen, mit Hilfe von Spiegeln umgelenkten Laserstrahl (21) hergestellt sind und wobei die Bahn (10) im Anschluss an das Perforationsaggregat (25) durch eine Leimstation hindurchförderbar ist, in der Leim im Bereich ausgewählter Flächen durch ein Beleimungsaggregat (29) auf die fortlaufende Bahn (10) übertragbar ist, **gekennzeichnet durch** folgende Merkmale:
a) der Laserstrahl (21) ist einem Strahllenker zuführbar, insbesondere einem drehenden Prismenspiegel bzw. Polygonspiegel (34) mit einer Vielzahl von Einzelspiegeln (39),
b) der von dem Strahllenker abgelenkte bzw. reflektierte Laserstrahl (21) ist auf einen Strahlreflektor gerichtet mit einer Spiegelgruppe aus einer Mehrzahl von Richtspiegeln (35, 36), die je einem herzustellenden Loch (14) zugeordnet sind,
c) der vom Strahlreflektor bzw. von dessen Richtspiegeln (35, 36) reflektierte Laserstrahl (21) ist auf einen oberhalb der Materialbahn (10) angeordneten Strahlumlenker gerichtet, insbesondere mit zwei Umlenkspiegeln (37, 38), die je zur Erzeugung einer Lochgruppe (15, 16) dienen.

2. Vorrichtung nach Anspruch 1, **dadurch gekennzeichnet, dass** Strahllenker und/oder Strahlreflektor und/oder Strahlumlenker derart relativ zueinander angeordnet sind, dass durch den (einzigen) Laserstrahl (21) nahezu zeitgleich zwei Querreihen (18) je einer Lochgruppe (15, 16) herstellbar sind.

3. Vorrichtung nach Anspruch 1 oder 2, **dadurch gekennzeichnet, dass** die (zwei) Umlenkspiegel (37, 38) derart in Relativstellung zu den Richtspiegeln (35, 36) angeordnet sind, dass der Laserstrahl (21) entlang einer im Wesentlichen geraden, quer zur Materialbahn (10) gerichteten Linie an den Umlenkspiegeln (37, 38) entlang läuft.

4. Vorrichtung nach Anspruch 1 oder einem der weiteren Ansprüche, **dadurch gekennzeichnet, dass** die in (zwei) Gruppen nebeneinander angeordneten Richtspiegel (35, 36) in einer Ebene unter einem Winkel zur Längserstreckung der Materialbahn (10) positioniert und die Umlenkspiegel (37, 38) ebenfalls unter einem (spitzen) Winkel zur Längserstreckung der Materialbahn angeordnet sind, derart, dass der eine Umlenkspiegel (37) auf eine Gruppe von Richtspiegeln (35) und der anderer Umlenkspiegel (38) auf die andere Gruppe von Richtspiegeln (36) gerichtet ist.

5. Vorrichtung nach Anspruch 1 oder einem der weiteren Ansprüche, **dadurch gekennzeichnet, dass** die (zwei Gruppen der) Richtspiegel (35, 36) in einer Ebene im Wesentlichen parallel zur Längserstreckung der Materialbahn (10) und die zugeordneten Umlenkspiegel (37, 38) oberhalb der Materialbahn (10) in zwei Richtungen bzw. in zwei Achsen gekippt sind, derart, dass jeder Umlenkspiegel (37, 38) auf die zugeordnete Gruppe der Richtspiegel (35, 36) weist.

6. Vorrichtung nach Anspruch 1 oder einem der weiteren Ansprüche, **dadurch gekennzeichnet, dass** die Richtspiegel (35, 36) in Längsrichtung der Materialbahn (10) versetzt zu den Umlenkspiegeln (37, 38) angeordnet und unter einem spitzen Winkel zur Längserstreckung der Materialbahn (10) gerichtet sind, wobei die Umlenkspiegel (37, 38) unter unterschiedlichen spitzen Winkeln den zugeordneten Richtspiegeln (35, 36) zugekehrt sind.

7. Vorrichtung nach Anspruch 1 oder einem der weiteren Ansprüche, **dadurch gekennzeichnet, dass** die Umlenkspiegel (37, 38) jeweils in einem Einzelgehäuse (47, 48) mit nach unten gerichtetem Anschlussstück (49) angeordnet sind, wobei der Innenraum des Einzelgehäuses (47, 48) bzw. des Anschlussstücks (49) absaugbar ist.

## Claims

1. Apparatus for producing cigarettes with a tip, in particular filter cigarettes, having a tip paper or covering paper which has perforations or holes (14), the perforations or holes (14) being arranged in the region of a continuous web (10) of the covering material or covering paper in regular hole groups (15, 16), in particular with longitudinal rows (19) and transverse rows (18) of holes (14) which are produced by a single laser beam (21) which is deflected with the aid of mirrors, and it being possible for the web (10) to be conveyed after the perforation unit (25) through a glue station, in which glue can be transferred onto the continuous web (10) in the region of selected areas by a gluing unit (29), **characterized by** the following features:
a) the laser beam (21) can be fed to a beam guide, in particular to a rotating prismatic mirror or polygon mirror (34) with a multiplicity of individual mirrors (39),
b) the laser beam (21) which is deflected or reflected by the beam guide is directed onto a beam reflector with a mirror group comprising a plurality of directing mirrors (35, 36) which are assigned to in each case one hole (14) to be produced,
c) the laser beam (21) which is reflected by the beam reflector or its directing mirrors (35, 36) is directed onto a beam deflector which is arranged above the material web (10), in particular with two deflecting mirrors (37, 38) which in each case serve to produce a hole group (15, 16).

2. Apparatus according to Claim 1, **characterized in that** beam guide and/or beam reflector and/or beam deflector are arranged relative to one another in such a way that two transverse rows (18) per hole group (15, 16) can be produced virtually at the same time by the (single) laser beam (21).

3. Apparatus according to Claim 1 or 2, **characterized in that** the (two) deflecting mirrors (37, 38) are arranged in a relative position to the directing mirrors (35, 36) in such a way that the laser beam (21) runs along the deflecting mirrors (37, 38) along a substantially straight line which is directed transversely with respect to the material web (10).

4. Apparatus according to Claim 1 or one of the further claims, **characterized in that** the directing mirrors (35, 36) which are arranged in (two) groups next to one another are positioned in a plane at an angle to the longitudinal extent of the material web (10) and the deflecting mirrors (37, 38) are likewise arranged at an (acute) angle to the longitudinal extent of the material web, in such a way that one deflecting mirror (37) is directed onto one group of directing mirrors (35) and the other deflecting mirror (38) is directed onto the other group of directing mirrors (36).

5. Apparatus according to Claim 1 or one of the further claims, **characterized in that** the (two groups of) directing mirrors (35, 36) are tilted in one plane substantially parallel to the longitudinal extent of the material web (10) and the associated deflecting mirrors (37, 38) above the material web (10) are tilted in two directions or in two axes, in such a way that each deflecting mirror (37, 38) points to the associated group of directing mirrors (35, 36).

6. Apparatus according to Claim 1 or one of the further claims, **characterized in that** the directing mirrors (35, 36) are arranged offset with respect to the deflecting mirrors (37, 38) in the longitudinal direction of the material web (10) and are directed at an acute angle to the longitudinal extent of the material web (10), the deflecting mirrors (37, 38) facing the associated directing mirrors (35, 36) at different acute angles.

7. Apparatus according to Claim 1 or one of the further claims, **characterized in that** the deflecting mirrors (37, 38) are arranged in each case in an individual housing (47, 48) with a downwardly directed connection piece (49), it being possible for the interior of the individual housing (47, 48) and/or of the connection piece (49) to be extracted by suction.

## Revendications

1. Dispositif pour fabriquer des cigarettes munies d'un embout, notamment des cigarettes filtres, avec un papier d'embout ou un papier de revêtement présentant des perforations ou des trous (14), les perforations ou les trous (14) étant disposés dans la région d'une bande continue (10) du matériau de revêtement ou du papier de revêtement par groupes de trous réguliers (15, 16), notamment en rangées longitudinales (19) et en rangées transversales (18) de trous (14), qui sont fabriqués par un faisceau laser (21) unique, dévié à l'aide de miroirs, la bande (10) pouvant être avancée à la suite de l'unité de perforation (24) à travers un poste de collage, dans lequel de la colle peut être transférée dans la région de surfaces souhaitées par une unité d'encollage (29) sur la bande continue (10),
**caractérisé par** les caractéristiques suivantes :
a) le faisceau laser (21) peut être acheminé dans un orienteur de faisceau, en particulier un miroir prismatique rotatif ou un miroir polygonal (34) avec une pluralité de miroirs individuels (39),
b) le faisceau laser (21) dévié ou réfléchi par l'orienteur de faisceau est orienté vers un réflecteur de faisceau avec un groupe de miroirs provenant d'une pluralité de miroirs d'orientation (35, 36), qui sont associés à un trou respectif à fabriquer (14),
c) le faisceau laser (21) réfléchi par le réflecteur de faisceau ou par ses miroirs d'orientation (35, 36) est orienté vers un inverseur de faisceau disposé au-dessus de la bande de matériau (10), notamment avec deux miroirs d'inversion (37, 38) qui servent chacun à produire un groupe de trous (15, 16).

2. Dispositif selon la revendication 1, **caractérisé en ce que** l'orienteur de faisceau et/ou le réflecteur de faisceau et/ou l'inverseur de faisceau sont disposés les uns par rapport aux autres de telle sorte que le faisceau laser (unique) (21) permette de fabriquer pratiquement simultanément deux rangées transversales (18) d'un groupe de trous respectif (15, 16).

3. Dispositif selon la revendication 1 ou 2,
**caractérisé en ce que** les (deux) miroirs d'inversion (37, 38) sont disposés en position relative par rapport aux miroirs d'orientation (35, 36) de telle sorte que le faisceau laser (21) soit orienté le long d'une ligne essentiellement droite, transversale à la bande de matériau (10), le long des miroirs d'inversion (37, 38).

4. Dispositif selon la revendication 1 ou selon l'une quelconque des autres revendications, **caractérisé en ce que** les miroirs d'orientation (35, 36) disposés les uns à côté des autres dans (deux) groupes sont positionnés dans un plan suivant un angle par rapport à l'étendue longitudinale de la bande de matériau (10) et les miroirs d'inversion (37, 38) sont également disposés suivant un angle (aigu) par rapport à l'étendue longitudinale de la bande de matériau, de telle sorte qu'un miroir d'inversion (37) soit orienté vers un groupe de miroirs d'orientation (35) et que l'autre miroir d'inversion (38) soit orienté vers l'autre groupe de miroirs d'orientation (36).

5. Dispositif selon la revendication 1 ou selon l'une quelconque des autres revendications, **caractérisé en ce que** les (deux groupes de) miroirs d'orientation (35, 36) sont basculés dans un plan essentiellement parallèle à l'étendue longitudinale de la bande de matériau (10) et les miroirs d'inversion associés (37, 38) sont basculés au-dessus de la bande de matériau (10) dans deux directions ou suivant deux axes, de telle sorte que chaque miroir d'inversion (37, 38) soit tourné vers le groupe associé de miroirs d'orientation (35, 36).

6. Dispositif selon la revendication 1 ou selon l'une quelconque des autres revendications, **caractérisé en ce que** les miroirs d'orientation (35, 36) sont disposés de manière décalée dans la direction longitudinale de la bande de matériau (10) par rapport aux miroirs d'inversion (37, 38) et sont orientés suivant un angle aigu par rapport à l'étendue longitudinale de la bande de matériau (10), les miroirs d'inversion (37, 38) étant tournés suivant différents angles aigus vers les miroirs d'orientation associés (35, 36).

7. Dispositif selon la revendication 1 ou selon l'une quelconque des autres revendications, **caractérisé en ce que** les miroirs d'inversion (37, 38) sont disposés à chaque fois dans un boîtier unique (47, 48) avec un élément de raccordement orienté vers le bas (49), l'espace intérieur du boîtier unique (47, 48) ou de l'élément de raccordement (49) pouvant être aspiré.
